Europäisches Patentamt

European Patent Office

Office européen des brevets

(19)

(11) Veröffentlichungsnummer: **0 010 065**
**B1**

(12) # EUROPÄISCHE PATENTSCHRIFT

(45) Veröffentlichungstag der Patentschrift:
12.08.81

(51) Int. Cl.³. **B 62 D 27/06**

(21) Anmeldenummer 79810109.3

(22) Anmeldetag: 28.09.79

(54) Verschlussvorrichtung für klappbare Bordwände eines Lastwagens, insbesondere eines Lastkraftfahrzeuges und dessen Anhängers.

(30) Priorität: 29.09.78 CH 10164/78

(43) Veröffentlichungstag der Anmeldung:
16.04.80 Patentblatt 80/8

(45) Bekanntmachung des Hinweises auf die Patenterteilung:
12.08.81 Patentblatt 81/32

(84) Benannte Vertragsstaaten:
AT BE CH DE FR GB IT NL SE

(56) Entgegenhaltungen:
**CH-A-399 204**
**DE-U-1 985 489**
**DE-U-7 206 911**
**US-A-2 568 058**

(73) Patentinhaber: **Peter Wenger SA, Vignette 22,**
**CH-1530 Payerne (Kanton Waadt) (CH)**

(72) Erfinder: **Schaefer, Götz, Rue des Lilas 6,**
**CH-1530 Payerne (Kanton Waadt) (CH)**

(74) Vertreter: **Bovard, Fritz Albert et al, Bovard & Cie.**
**Patentanwälte VSP-Rechtsanwälte Optingenstrasse 16,**
**CH-3000 Bern 25 (CH)**

BUNDESDRUCKEREI BERLIN

Verschlußvorrichtung für klappbare Bordwände eines Lastwagens, insbesondere eines Lastkraftfahrzeuges und dessen Anhängers

Die Erfindung betrifft eine Verschlußvorrichtung für klappbare Bordwände eines Lastwagens, insbesondere Lastkraftfahrzeuges und dessen Anhängers, mit einer drehbaren Vertikalwelle und einem senkrecht zu ihr verlaufenden, mit der Welle mittels eines Haltestückes drehfest verbundenen Verriegelungshebels, dessen freier Endteil hinter einer an einer Bordwand der Bordwände befestigten Schlaufe hineinschwenkbar ist, wobei die Vertikalwelle an ihrem oberen Ende mit einem zu ihr senkrecht verlaufenden Haltenocken versehen ist, der mit der Welle drehfest verbunden und hinter einen an einem Mittelpfosten befestigten vertikalen Zapfen hintergreifbar ist.

Eine Verschlußvorrichtung für klappbare Bordwände von Lastfahrzeugen ist aus der CH-PS 399 204 bekannt; sie weist eine Vertikalwelle mit einem an ihrem oberen Ende drehfest befestigten Schwenkhaken auf, der hinter einen auf einem Pfosten befestigten Zapfen hintergreift. Mit dem unteren Ende der Welle ist ein Bedienungshebel drehfest verbunden, der einen verbiegbaren Endteil besitzt, der in eine Rasteinrichtung einschiebbar ist.

Der Nachteil der in der erwähnten CH-PS beschriebenen Verschlußvorrichtung besteht darin, daß die Plankenprofile gebohrt werden müssen, um die Lagerung der Welle an der Bordwand zu ermöglichen. Zur Lagerung der Welle an der seitlichen Bordwand dient ferner ein Lagerauge, das am vertikalen Rahmenprofil angeschweißt ist. Die Einzelteile der Vorrichtung sind zusammengeschweißt; die geschweißten Teile sind aber schwer zu verzinken. Des weiteren ist die Welle der Verschmutzung ausgesetzt, weil sie nicht geschützt ist, so daß sie in ihrer Drehbewegung behindert werden kann. Der Bedienungshebel ragt in der offenen Stellung der Verschlußvorrichtung aus der Fläche der Bordwand hinaus, was für den Bedienenden eine Verletzungsgefahr darstellt.

Um eine optimale Sicherung gegen Beschädigungen beim Beladen des Fahrzeuges zu gewährleisten, ist die Welle nach dem deutschen Gebrauchsmuster 1985489 in einem Mittelpfosten untergebracht, wobei die Welle beiderseits den Mittelpfosten überragt. Die Unterbringung der Welle im Mittelpfosten vermag zwar sie vor Schmutz bzw. Beschädigung zu schützen, sie weist aber den wesentlichen Nachteil auf, daß der Betätigungshebel der Welle nicht beliebig in der Höhe angebracht werden kann. Der Mittelpfosten, der den Anschlag für die Bordwände bildet, würde dadurch wesentlich geschwächt. Wenn die Bauhöhe des Mittelpfostens erhöht würde, würde sich die Innenbreite des Fahrzeuges vermindern, was ebenfalls nicht zulässig ist. Des weiteren liegt der Verriegelungshebel der Welle unter den Scharnieren, so daß bei einem seitlichen Belad des Fahrzeuges derselbe nicht zugänglich ist.

In der US-PS 2 568 058 ist eine Verri vorrichtung beschrieben, deren rot Betätigungsstange innerhalb der Türe der inneren und der äußeren Wand angeordnet ist. Sie erstreckt sich dur Tasche, die durch die nach innen abge Außenwand gebildet ist. Das obere und Ende der Betätigungsstange ist in je festen Halter gehalten. Die Verriegelungss wird durch einen Handhebel gedreht, de seiner Buchse, die die Stange umschließ derselben mittels einer Nute befestigt ist Handhebel ist an dem Teil der Stange befe der sich durch die Tasche hindurch erst und wird mit der Stange in der horizor Ebene in der Tasche verschwenkt. Die Mo bzw. Demontage einer solchen Verriegel vorrichtung ist kompliziert und der Verr lungshebel kann nicht mit der Stange hera nommen werden. Eine solche Vorrichtung nur in einer Tür untergebracht werden, s nicht bei Bordwänden anwendbar.

Der Erfindung liegt die Aufgabe zu Grund oben erwähnten Nachteile zu beseitigen eine Verschlußvorrichtung zu schaffen, Montage und Demontage, z. B. zwecks Re turen, rasch vor sich geht und die Verletzungsgefahr für den Bedienenden stellt. Die Verschlußvorrichtung soll unter Umständen durch einfache Griffe leicht zuverlässig bedienbar sein. Es wird v verlangt, daß alle Teile dieser Vorricl verzinkt werden.

Erfindungsgemäß werden diese Aufgabe der eingangs erwähnten Verschlußvorricl dadurch gelöst, daß die Vertikalwelle in e zwischen dem Mittelpfosten und den Bord den angeordneten, die Bordwände abschli den Profil gelagert ist, daß das Halte einerseits mit einem Mittellager der Vertiki le unlösbar verbunden ist und andererseit dem Profil herausragt, daß an dem herausr den Teil des Haltestückes der Verriegelun bel in vertikaler Ebene abklappbar befesti und daß die Wand des Abschlußprofils aufgeschlitzt ist, um den Durchgang des mi Mittellager der Vertikalwelle unlösbar verb nen Haltestückes beim Herausziehen der kalwelle aus dem Abschlußprofil nach ok ermöglichen.

Der Erfindungsgegenstand wird anhan Zeichnungen beispielsweise näher erläut zeigen

Fig. 1 eine Ansicht auf eine Verschlußv tung, deren Vertikalwelle in einem im S dargestellten Abschlußprofil untergebrac welches Profil sich zwischen dem Mittelp und den Bordwänden eines Lastwagens det, und

Fig. 2 eine Draufsicht auf die Verschl richtung nach der Fig. 1.

Die in den Figuren dargestellte Verschl richtung ist für klappbare Bordwände eines Lastwagens, insbesondere eines Lastkraftfahrzeuges und dessen Anhängers bestimmt. Sie enthält eine drehbare Vertikalwelle 1, die in einem Abschlußprofil 7 untergebracht ist. Das Abschlußprofil 7 ist zwischen einem Mittelpfosten 8 und den Bordwänden 13 des Lastwagens angeordnet; es ist mittels Nieten 16 an den Bordwänden 13 befestigt. Es kann auch mit den Bordwänden 13 mittels Schrauben verschraubt werden.

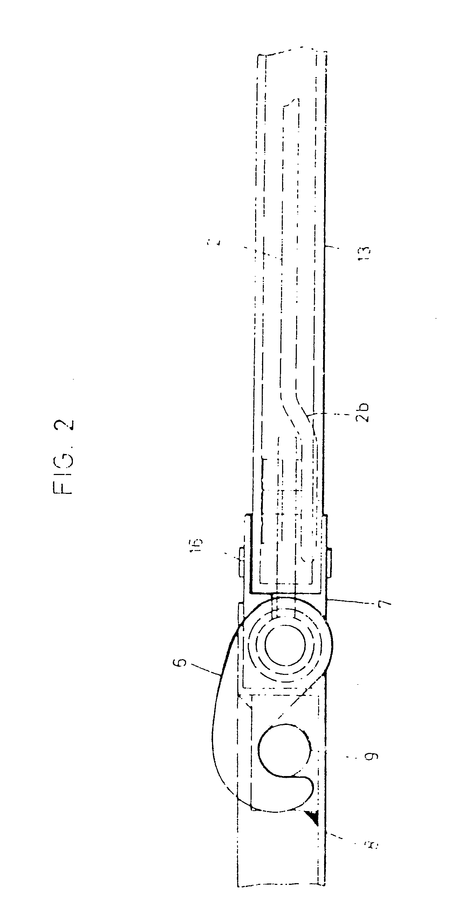

Die Vertikalwelle 1 ist in einer das Abschlußprofil 7 durchlaufenden Bohrung 10 drehbar gelagert. Mit dem oberen Ende der Welle ist ein senkrecht zu ihr verlaufender Haltenocken 6 drehfest verbunden. Der Haltenocken 6 greift in der verriegelten Stellung der Vorrichtung hinter einen am Mittelpfosten 8 befestigten vertikalen Zapfen 9, wie am besten aus der Fig. 2 ersichtlich ist. Die Vertikalwelle 1 ist in der Bohrung 10 in Kunststofflagern 17 gehalten. Etwa im mittleren Bereich weist die Vertikalwelle 1 ein Mittellager 4 mit einem senkrecht zur Welle 1 hinausragenden Haltestück 4a auf, an welchem ein Verriegelungshebel 2 in einem Schwenklager 5 abklappbar befestigt ist.

Das Abschlußprofil 7 ist an der Vorderseite im Bereich des Mittellagers 4 in der Breite des mit dem Mittellager 4 verbundenen Haltestückes 4a in Form einer Ausnehmung 12 ausgeschnitten, um das Ausschwenken des Verriegelungshebels 2 um annähernd 90° in horizontaler Ebene zu ermöglichen. Um das ungewollte Verschieben bzw. Herausrutschen der Welle 1 aus dem Abschlußprofil 7 nach oben zu verhindern, ist im oberen Bereich des Mittellagers 4 ein Stift 15 vorgesehen, der sich gegen die untere Kante der Bohrungswand des Abschlußprofils 7 abstützt.

Die im Abschlußprofil 7 untergebrachte Vertikalwelle 1 kann, wenn benötigt, aus dem Abschlußprofil 7 nach oben herausgenommen werden. Zu diesem Zweck wird das Abschlußprofil 7 von den Bordwänden 13 durch Abhauen der Nieten 16 in dem unverriegelten Zustand der Vorrichtung weggenommen, wonach der Stift 15 aus dem Mittellager 4 entfernt wird. Dann kann die Welle 1 aus dem Abschlußprofil 7 herausgezogen werden, wobei das Haltestück 4 mit dem Verriegelungshebel 2 entlang eines in der Bohrungswand vorgesehenen Schlitzes 11 des Abschlußprofils 7 rutscht. Da der Haltenocken 6 oberhalb des Abschlußprofils und der Zapfen 9 oberhalb des Mittelpfostens 8 liegt, kann das Herausziehen der Welle 1 aus dem Abschlußprofil 7 reibungslos vor sich gehen. Dadurch wird die Montage bzw. die Demontage der Verschlußvorrichtung wesentlich erleichtert.

Der Verriegelungshebel 2 weist einen Endteil 2a auf, der im Verriegelungszustand der Vorrichtung hinter einer an einer Bordwand 14 der Bordwände 13 befestigten Schlaufe 3 hintergreift. Die Bordwand 14, an welcher die Schlaufe 3 befestigt ist, ist gegenüber den benachbarten Bordwänden versenkt angeordnet, so daß der Verriegelungshebel 2 nicht aus der Ebene der Bordwände 13 hinausragt. Außerdem ist der Verriegelungshebel 2 in Richtung des Seitenladens 14 an der mit 2b bezeichneten Stelle (siehe Fig. 2) in Richtung der Seitenwand gekröpft. Durch die schwenkbare Befestigung des Verriegelungshebels 2 am Haltestück 4a kann er im unverriegelten Zustand der Vorrichtung in vertikaler Ebene abgeklappt werden. Somit wird die Verletzungsgefahr für den Bedienenden eliminiert, die bei den Ausführungsformen des Verriegelungshebels bestand, der im unverriegelten Zustand der Vorrichtung nach außen hinausragt.

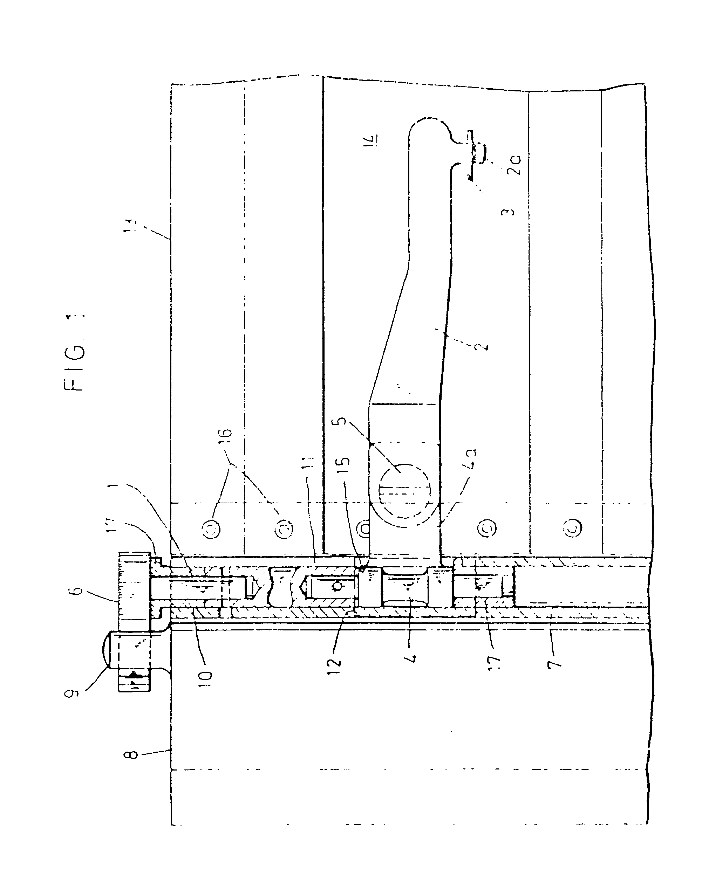

Alle Teile der Verschlußvorrichtung werden in Serienproduktion geschmiedet; sie haben deshalb keine Schweißstellen. Durch diese Tatsache wird die Verzinkung aller Teile wesentlich erleichtert. Das Mittellager 4 ist, wie aus der Fig. 1 ersichtlich, in seinem zentralen Bereich verjüngt. Somit wird die Bildung von Schmutz an diesem Teil vermieden. Es entsteht somit keine Bewegungsbehinderung beim Ausschwenken des Verriegelungshebels 2. Die Außenflächen des Mittelpfostens 8, des Abschlußprofils 7 und der Bordwände 13 mit der Ausnahme der Bordwand 14 sind bündig. Das Abschlußprofil 7 ist ein stranggezogenes Profil.

Beim Verriegeln der Verschlußvorrichtung wird wie folgt vorgegangen. Der Bedienungshebel 2, der aus einem Flachprofil besteht, wird in Richtung der Bordwand 14 gedrückt und in dieser Stellung nach unten mit seinem Endteil 2a hinter die Schlaufe hineingeschoben. Beim Abstützen des Haltenockens 6 gegen den Zapfen 9 entsteht nämlich eine Vorspannung von etwa 30 mm, so daß der Verriegelungshebel 2 mit dem Haltestück 4a elastisch verbogen werden muß; dies geschieht mit der offenen Hand des Bedienenden. Nach dem Hineinschieben des Endteiles 2a hinter die Schlaufe 3, drückt derselbe durch die Wirkung der Vorspannung gegen die Schlaufe 3, so daß er während der Fahrt in der Schlaufe 3 sicher verriegelt ist.

Der Bedienungshebel der oben beschriebenen Verschlußvorrichtung läßt sich in Bordwänden auf jeder beliebigen Höhe einbauen, er ist also auch für hohe Fahrzeuge, wie Sattelauflieger, bestens geeignet. Die Vertikalwelle ist im Abschlußprofil eingebaut, der zwischen dem Mittelpfosten und den Bordwänden angeordnet ist. Somit können die Mittel- und Eckpfosten freigestaltet werden. Durch die Vorspannung des Haltenockens gegen den Zapfen wird das Klappern der Bordwände auch bei Leerfahrt des Fahrzeuges vollständig verhindert.

**Patentansprüche**

1. Verschlußvorrichtung für klappbare Bordwände eines Lastkraftwagens, insbesondere eines Lastkraftfahrzeuges und dessen Anhängers, mit einer drehbaren Vertikalwelle (1) und einem senkrecht zu ihr verlaufenden, mit der Welle (1) mittels eines Haltestückes (4a) drehfest verbundenen Verriegelungshebels (2), dessen freier Endteil (2a) hinter einer an einer Bordwand (14) der Bordwände (13) befestigten Schlaufe (3) hineinschwenkbar ist, wobei die Vertikalwelle (1) an ihrem oberen Ende mit einem zu ihr senkrecht verlaufenden Haltenokken (6) versehen ist, der mit der Welle (1) drehfest verbunden und hinter einen an einem Mittelpfosten (8) befestigten vertikalen Zapfen (9) hintergreifbar ist, dadurch gekennzeichnet, daß die Vertikalwelle (1) in einem zwischen dem Mittelpfosten (8) und den Bordwänden (13) angeordneten, die Bordwände (13) abschließenden Profil (7) gelagert ist, daß das Haltestück (4a) einerseits mit einem Mittellager (4) der Vertikalwelle (1) unlösbar verbunden ist und andererseits aus dem Profil (7) herausragt, daß an dem herausragenden Teil des Haltestücks (4a) der Verriegelungshebel (2) in vertikaler Ebene abklappbar befestigt ist, und daß die Wand des Abschlußprofils (7) axial aufgeschlitzt ist, um den Durchgang des mit dem Mittellager (4) der Vertikalwelle (1) unlösbar verbundenen Haltestücke (4a) beim Herausziehen der Vertikalwelle (1) aus dem Abschlußprofil (7) nach oben zu ermöglichen.

2. Verschlußvorrichtung nach Anspruch 1, dadurch gekennzeichnet, daß die abklappbare Befestigung des Verriegelungshebels (2) am Haltestück (4a) durch ein Schwenklager (5) bewerkstelligt ist.

3. Verschlußvorrichtung nach Anspruch 1, dadurch gekennzeichnet, daß das Mittellager (4) der Vertikalwelle (1) in seinem zentralen Bereich verjüngt ist.

4. Verschlußvorrichtung nach Anspruch 1, dadurch gekennzeichnet, daß im oberen Bereich des Mittellagers (4) ein entfernbarer Stift (15) zum Verhindern des ungewollten Herausrutschens der Welle (1) aus dem Abschlußprofil (7) vorgesehen ist.

5. Verschlußvorrichtung nach einem der Ansprüche 1 bis 5, dadurch gekennzeichnet, daß alle Verschlußteile geschmiedet sind.

## Claims

1. Fastening device for hinged sides of a lorry, particularly of a lorry and its trailer, having a rotatable vertical shaft (1) and a latch lever (2) running perpendicular to the shaft (1) and fixed thereto for rotation therewith by means of a holding piece (4a), the free end portion (2a) of which lever is swivellable in behind a loop (3) secured to one side (14) of the sides (13), the vertical shaft (1) being provided at the top thereof with a holding cam (6) running perpendicular thereto, which holding cam is fixed to the shaft (1) for rotation therewith and is capable of engaging behind a vertical pin (9) secured to a centre post (8), characterized in that the vertical shaft (1) is mounted in a section piece (7) disposed between the centre post (8) and the sides (13) and terminating the sides (13), that the holding piece (4a) is undetachably connected to a central bearing (4) of the vertical shaft (1), on the one hand, and projects out of the section piece (7), on the other hand, that the latch lever (2) is secured swingably downward in a vertical plane to the projecting part of the holding piece (4a), and that the wall of the terminal section piece (7) is axially slit to make possible the passage of the holding piece (4a) undetachably connected to the central bearing (4) of the vertical shaft (1) upon withdrawal of the vertical shaft (1) from the terminal section piece (7).

2. Fastening device according to claim 1, characterized in that the downwardly swingable securing of the latch lever (2) to the holding piece (4a) is effected by means of a swivel bearing (5).

3. Fastening device according to claim 1, characterized in that the central bearing (4) of the vertical shaft (1) is tapered in its central region.

4. Fastening device according to claim 1, characterized in that a removable pin (15) is provided for in the upper region of the central bearing (4) for preventing the shaft (1) from slipping out of the terminal section piece (7) unintentionally.

5. Fastening device according to one of the claims 1 to 5, characterized in that all fastener parts are forged.

## Revendications

1. Dispositif de verrouillage d'un panneau latéral rabattable faisant partie de la paroi d'un véhicule, notamment d'un camion ou d'une remorque routière, comprenant un arbre (1) disposé verticalement, un levier de verrouillage (2) solidaire en rotation de l'arbre vertical par l'intermédiaire d'un élément de liaison (4a), l'extrémité libre (2a) du levier étant mobile de façon à s'engager dans une boucle (3) fixée au panneau (14), dispositif dans lequel l'arbre vertical (1) est solidaire à son extrémité supérieure d'un came (6) de retenue qui lors d'une rotation de l'arbre s'engage derriere un tenon (9) fixé à un montant (8) fixe de la dite paroi latérale (13), caractérisé en ce qu'il comprend un segment profilé (7) fixé au côté latéral du panneau (13) et dans lequel le dit arbre vertical (1) est engagé, en ce que le dit élément de liaison (4) est fixé à un pivot intermédiaire (4) solidaire de l'arbre (1) et s'étend latéralement hors du profilé (7), en ce que le levier (2) est articulé autour d'une axe horizontal sur un prolongement latéral de l'élément de liaison et en ce que le profilé présente une fente longitudinale afin der permettre le dégagement de l'arbre (1) avec le pivot (4) et l'élément de liaison (4a) par déplacement de l'ensemble vers le haut.

2. Dispositif de verrouillage selon la revendication 1, caractérisé en ce que l'articulation du levier de verrouillage (2) à l'élément de liaison

(4a) est réalisé avec un tourillon de basculement (5).

3. Dispositif selon la revendication 1, caractérisé en ce que le pivot (4) de l'arbre vertical (1) présente une portion de diamètre réduit dans sa partie centrale.

4. Dispositif selon la revendication 1, caractérisé en ce que dans sa partie supérieure le pivot (4) coopere avec une goupille amovible (15) destiné a empêcher que l'arbre (1) se degage intempestivement du profilé (7).

5. Dispositif selon l'une quelconque des revendications 1 a 5, caractérisé en ce que toutes les pièces du dispositif sont des pièces forgees.

FIG. 1

FIG. 2